# EUROPEAN PATENT SPECIFICATION

(11) **EP 3 326 893 B1**
(45) Date of publication and mention of the grant of the patent: **09.02.2022**
(21) Application number: 17202785.6
(22) Date of filing: 21.11.2017
(51) Int. Cl.: B62H 1/04, B62H 1/06

(54) **STAND FOR TWO-WHEELED VEHICLES**
ZWEIRADSTÄNDER
BÉQUILLE POUR VÉHICULE AVEC DEUX ROUES

(30) Priority: 25.11.2016 IT 201600119668
(43) Date of publication of application: 30.05.2018
(73) Proprietor: Candelo, Carolina, 16011 Arenzano (GE) (IT); Candelo, Isabella, 16011 Arenzano (GE) (IT)
(72) Inventor: CANDELO, ROBERTO, 16011 ARENZANO (GE) (IT)
(74) Representative: Karaghiosoff, Giorgio Alessandro

(56) References cited:
- CN-U- 201 545 094
- DE-A1- 3 433 539
- DE-A1- 10 358 469
- FR-A1- 2 838 097
- JP-A- H0 263 985

## Description

The present invention relates to a kickstand for vehicles, preferably for motorcycles, motor scooters, bicycles, electric bicycles and the like.

It is known, in prior art, to balance two-wheeled vehicles in parked condition by means of a kickstand, which is coupled to the frame of the vehicle so as to rotate.

In their simplest form kickstands have a reversed U shape and are manually operated.

In some more developed embodiments, often for particularly heavy vehicles or when the user has limitations as regards the force he/she can apply, there are provided electrically operated kickstands; briefly, in this case the U-shaped support is operated by an electric motor controlled by the user.

Such automatic solutions, although being useful, are not free from drawbacks.

One of such drawbacks is the fact that known kickstands have an operating path divided in two parts: from the retracted position the arms of the U shape rotate till reaching a substantially vertical or intermediate position (first path part) at which the vehicle is partially lifted; from the intermediate position the arms of the U shape continue to rotate till abutting against a detent fixed with respect to the frame (second path part) at which the vehicle is firmly balanced (parked).

In case of considerably heavy vehicles (e.g. grand touring motorcycles) having electric kickstands the effort for the electric motor driving the kickstand is considerable, resulting in the need of providing quite powerful motors and, as a consequence, having considerable costs.

Another drawback is due to the fact that also the bearing structure of the kickstand (U shape, attachments to the frame, and the frame in the area fastening to the kickstand) have to be oversized such to support the vehicle weight partially lifted at the intermediate position, between the first and second path parts.

Such electric kickstands, as a consequence, often are subjected to failures or damages.

Still another drawback of such electric kickstands is found when the vehicle is parked on uneven surfaces: in this case it may happen that one of the arms of the U touches ground before the other one; when reaching the intermediate position all the vehicle weight is loaded only on the arm of the U in contact with the ground (or - more generally - the two arms are not evenly loaded), resulting in that such arm runs the risk of being deformed, and even of being broken.

DE10358469 describes a kickstand for a motorcycle, with a pivoting device which allows the tilting support to be pivoted from an essentially horizontal rest position into an essentially vertical working position, and two support arms protruding laterally from the pivoting device wherein a hydraulic piston / cylinder unit is arranged at each of the free ends of the support arms and allows a respective support ram to be extended hydraulically. In an embodiment of the kickstand, the two hydraulic units can be controlled separately in such a way that the motorcycle is aligned vertically when the support ram is extended but it is not further indicated how the vehicle can be maintained in a vertical position independently from the conformation of the ground there the kickstand is landed.The aim of the present invention is to provide a kickstand for vehicles, preferably for two-wheeled vehicles, such as motorcycles, motor scooters, bicycles, electric bicycles and the like overcoming the above mentioned drawbacks.

A further object of the present invention particularly is to provide such a kickstand for vehicles avoiding mechanical overloads on the support structure.

Still another object is to provide such a kickstand for vehicles that is sturdy and long-lasting in operation.

Still another object is to provide such a kickstand for vehicles that is quite simple to be installed, possibly also on already existing vehicles replacing the original kickstand.

Still another object is to provide such a kickstand for vehicles able to prevent the vehicle from being stolen.

Another object of the present invention is to provide a kickstand that besides meeting at least one or some of the above objects can be provided and mounted as equipment or kit of parts on already existing motorcycles not arranged in factory to be equipped with a motorized kickstand.

These and other objects are achieved by a kickstand for vehicles according to the first annexed claim.

The invention firstly relates to a kickstand for two-wheeled vehicles, such as motorcycles, motor scooters, bicycles, electric bicycles and the like comprising a base fastening to a frame of the vehicle, a driving motor and two legs swiveling with respect to the base along an operating path, between two limit positions coinciding with a rest condition of the kickstand, where the legs are not in contact with the ground, and an operating condition where the legs are in contact with the ground.

Said at least one leg, preferably both the legs are telescopically extensible and retractable since they comprise a cylindrical body and a bar sliding within the cylindrical body.

The kickstand comprises a hydraulic system driving the bar relative to the body.

And wherein the operating path, from the rest to the operating condition, is divided into two parts, a first operating path part, where the driving motor drives the leg or legs so as to rotate with respect to the base and a second operating path part where the driving hydraulic system drives the bar or bars extending from the cylindrical body.

While there is provided an automatic system balancing the extension path of said at least one bar from the cylindrical body that determines an extension path of each bar as a function of the distance between the position of the bar completely retracted into the cylindrical body and the point or region of support of said bar on the ground such to keep the vertical, longitudinal, central plane of the motor vehicle substantially perpendicular to the ground.

It is possible to provide different embodiment variants of the more general embodiment mentioned above.

According to one embodiment, each bar is composed of or is controlled by the rod of a hydraulic cylinder and each hydraulic cylinder is connected or connectable to a pressurized fluid delivery through a shared distribution chamber, the automatic balancing system being composed of said distribution chamber that generates a communication passageway, always open, between the two cylinders.

In this case the balancing system is due to the always open communication between the chambers of the two cylinders that control or whose rod is a corresponding bar and the compensation is guaranteed by the physical effect according to which the pressure in a fluid is always constant and the same.

A variant of such embodiment can provide each hydraulic cylinder to be connected separately and independently to the pressurized fluid delivery there being provided for each hydraulic cylinder and/or for each bar, sensors for the pressure of the bar against the ground and/or of the fluid inside the bar, the outputs of said sensors being connected to a control unit that compares the signals of said sensors with one another and stops the pressurized fluid flow to the first cylinder whose pressure value exceeds a predetermined threshold, supplying the pressurized fluid to the other cylinder till the pressure value measured for it exceeds also said threshold and/or is substantially identical to the value measured for said first cylinder.

Such variant is advantageous above all when instead of hydraulic cylinders controlling the bars or composing said bars with their rods, electromechanical linear actuators or similar actuators are used. In this case the direct communication is not possible therefore it is necessary to detect the condition of bars resting on the ground and the corresponding pressures exerted on the ground, such to power the motors of said electromechanical linear actuators in order to minimize the differences between said values that is to maintain the vehicle perfectly vertically oriented according to a perpendicular arrangement, that is a balancing condition with respect to the force of gravity.

A variant embodiment of the system can provide two methods for operating the kickstand different from each other as regards the movement in the two path parts namely in the first part where the kickstand is rotated from the rest position in which it is folded substantially against the lower side of the vehicle to the operating position in which it protrudes towards the ground and in which it is held, for example but not as a limitation, by means of detents respectively. In this variant embodiment, the rotation occurs by means of electromechanical actuators or as an alternative by hydraulic actuators.

The second part of the operating path that provides to extend the legs by deploying the bars can occur also by two alternatives by means of a hydraulic system or an electromechanical system.

Two preferred embodiments provide respectively:
- a combination of operation of the rotation of the kickstand from the rest to the operating condition and vice versa obtained by an electromechanical actuator and an extension while balancing said extension in accordance with the state of the ground which is of hydraulic type or;
- a combination of operation of the rotation of the kickstand from the rest to the operating condition and vice versa obtained by a hydraulic actuator and an extension while balancing said extension in accordance with the state of the ground which is of hydraulic type.

Obviously although these are not preferred and claimed embodiments, also other variants are possible using electromechanical actuators for both the parts of the path of the kickstand or a combination of hydraulically operated rotation and of extension operated by electromechanical actuators.

As regards the first variant that provides a combination of operation of the rotation by electromechanical actuators and extension by hydraulic system, it is also possible to provide the hydraulic system to be driven to supply pressurized fluid from the motor of the same electromechanical operation used for the rotation.

The description of the preferred embodiments shows further details and variant embodiments.

The second variant embodiment completely based on hydraulic operation is advantageous since it allows the kickstand to be made in the form of equipment that can be mounted also on motor vehicles not arranged in factory to be equipped with such type of kickstands.

It is clear also from the following description of the corresponding embodiment that in this case the kickstand can be made as a simple kit or equipment that requires a number of mechanical and electric interfaces between the kickstand, that is the control and operating system and the vehicle, facilitating the retrofitting installation and increasing the adaptability to different models of motor vehicles.

Therefore the invention relates also to a kickstand according to one or more of the described characteristics made as adaptation kit or equipment.

Operation of a kickstand according to the invention, can be achieved accorfing to a method, which is not part of the claimed invention, for operating a kickstand for vehicles, wherein the kickstand performs at least one first movement step that provides a rotational movement from a rest position not protruding beyond the lower side of the motor vehicle to an operating position protruding beyond said lower side of the vehicle to such an extent to generate at least a further support point of the motor vehicle on the ground in addition to those provided by wheels or by a wheel and vice versa and comprising the following steps starting from a rest step:
- besides said first movement step where the driving motor causes the legs to rotate with respect to the base and causes the hydraulic system to translate, the latter being in the not operating condition there is provided
- a second step providing an extension of each leg of the kickstand towards a support point on the ground, each leg being extended independently from the other one correspondingly to the distance necessary to reach the support on the ground, by measuring the pressure exerted by each leg on the ground and comparing it with a predetermined pressure threshold and/or comparing the pressure values detected for each leg.

According to one embodiment of the method the extension of the legs is hydraulically performed by providing an actuating cylinder moving an extension bar sliding with respect to the leg and the actuating cylinders associated to the two legs being connected in a firmly hydraulically communicating manner.

According to a variant of the method the extension of the legs is performed by electromechanical linear actuators by providing a linear actuator moving an extension bar sliding with respect to the leg and said actuators being controlled by a control unit in a separate and independent manner as a function of the difference of the pressure of each bar on the ground and to minimize or cancel said pressure difference and/or to maintain said pressure difference equal to or lower than a predetermined threshold value.

Even if the method is not claimed byt the present invention, it can be useful to understand the invention itself in some of the possible embodiments.

Further advantageous and optional characteristics are the subject matter of the dependent claims, which are an integral part of the present description.

These and other characteristics and advantages of the present invention will be more clear from the following description of some embodiments shown in annexed drawings in which:
Figs.1 and 2 are the kickstand of the invention in bottom and sectional side views along A-A plane, respectively, in rest condition;
Figs. 3,4 and 5 are the kickstand of the previous figures in bottom, sectional side and front views respectively in an intermediate operating condition;
Figs. 6, 7 and 8 are the kickstand of the previous figures in bottom, sectional side and front views respectively in a final operating condition;
Figs. 9 and 10 are the kickstand of the previous figures in the final operating condition, at a levelled ground (fig.9) and uneven ground (fig.10);
Fig.11 is the kickstand of the previous figures in sectional side view during a manual operating step;
Figure 12 is the block diagram of one embodiment of the invention wherein the kickstand is in the form of a device of the "retrofit" type that is it can be applied to already existing motor vehicles not provided in factory with a kickstand according to the present invention.

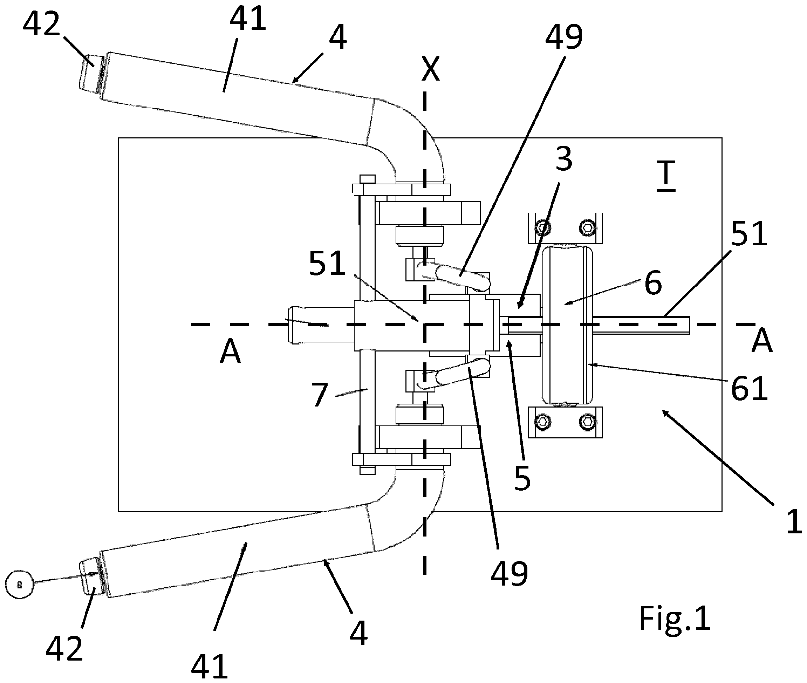

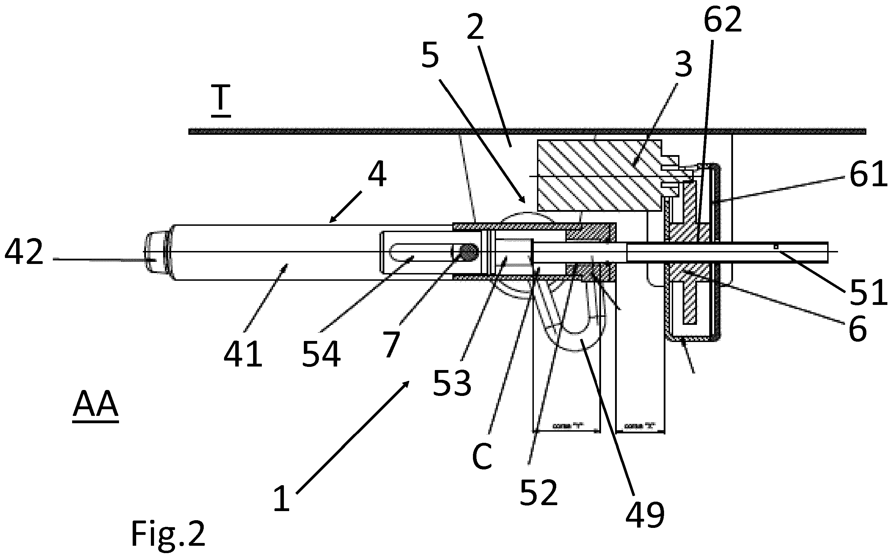

With reference to annexed figures 1 and 2, the kickstand 1 for vehicles, preferably two-wheeled vehicles, such as motorcycles, motor scooters, bicycles, electric bicycles and the like of the invention is shown in one embodiment where two legs 4 resting on the ground are provided.

It has to be noted that in one simplified embodiment the kickstand of the invention on the contrary is in the form of a so-called "side-stand", comprising only one leg 4; although the description below will be made for the two leg version, it is similar for the simplified version.

With reference again to fig. 1 and 2, the kickstand 1 - generally - comprises a base 2 fastening to a frame of the vehicle.

The base 2 is provided with at least means fastening to the frame, such as for example holes for threaded connections (bolts, nuts, screws) intended to engage it to the frame T, that in the figures is shown as simplified, such as a plate or the like.

In this exemplifying embodiment the kickstand 1 comprises two legs 4 rotating with respect to the base 2 along an operating path, between two limit positions.

Fig.1 and 2 show a first limit position, coinciding with a rest condition (or non-use condition) of the kickstand 1, where the legs 4 are retracted, that is not resting on or not in contact with the ground T.

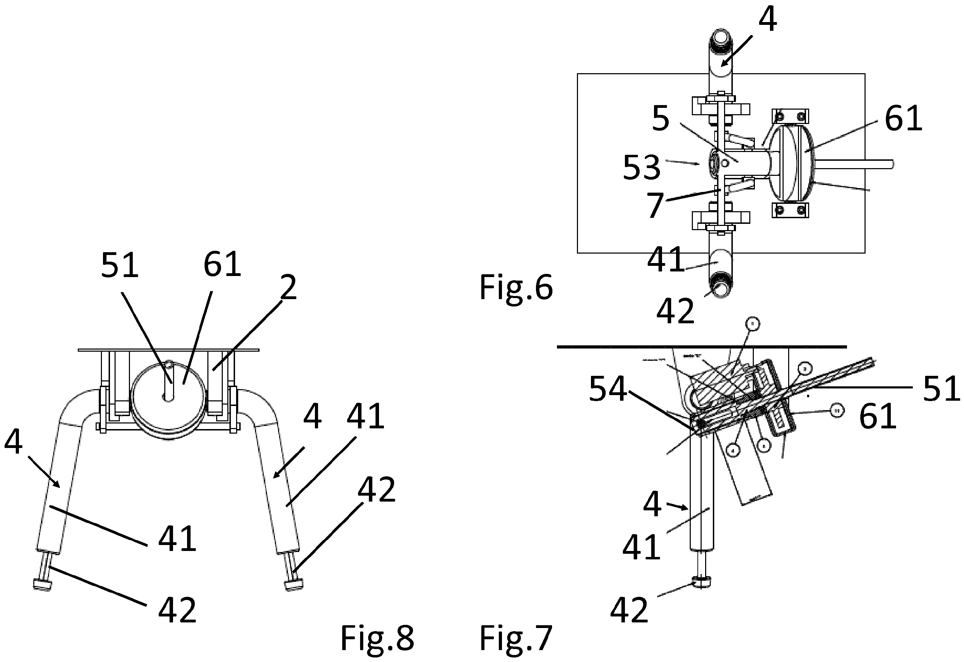

Figures 6-8 show the kickstand 1 in the second limit position, coinciding with a "final" operating condition (to distinguish it from an "intermediate" operating condition, better described below); in the final operating condition the legs 4 are in contact with the ground and support the parked vehicle.

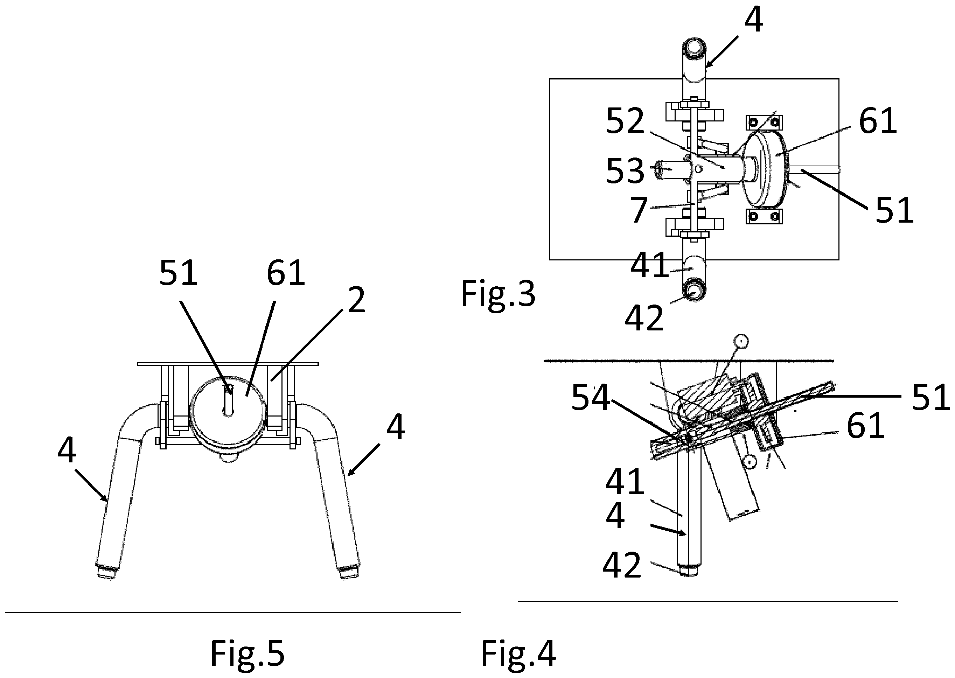

Between the limit position (rest position of figure 1, 2 and the final operating position of figures 6-8) the legs 4 pass through the intermediate position coinciding with an intermediate operating condition of figures 3-5.

Preferably in the rest condition, with reference to the kickstand 1 mounted on the vehicle, the legs 4 are horizontal, while in the intermediate and final operating position they are substantially vertical.

Such as shown in figures, the legs 4 are telescopic and comprise a cylindrical body 41 and a bar 42 sliding into the cylindrical body 41.

At the free end of the bar 42 there is preferably provided a pad resting on the ground, for example made of rubber or plastic material to enhance the support.

Preferably the bar 42 and the body 41, together with a thrust spring, housed in the body and acting on the bar 42, form a single-acting hydraulic cylinder, wherein the spring (not shown) acts on the bar 42 to keep it in the condition fitted in the body 41 (minimum extension condition).

Then the kickstand 1 comprises a hydraulic system 5 driving the bar 42 with respect to the body 41; particularly the hydraulic system 5 comprises a hydraulic pump 51 intended to feed a hydraulic fluid (e.g. oil) in the chamber between the body 41 and the bar 42 of the legs 4, to control the second one to be deployed from the first one while opposing the opposite action of the spring.

Characteristically, according to the invention, the operating path of the legs, from the rest condition to the operating condition, is divided in two parts, a first operating path part, where the driving motor 3 drives the leg or legs 4 to rotate with respect to the base 4 and a second operating path part where the driving hydraulic system 5 drives the rods 42 to extend from the cylindrical body 41.

Thus an optimal operation is obtained, especially due to the fact that the most heavy path portion, as regards mechanical efforts, is performed also, or only, by the hydraulic system.

Particularly in the first operating path part the hydraulic system 5 is not operating and in the second operating path part the hydraulic system 5 is driven by the driving motor 3, preferably an electric motor.

In the first operating path part (from the rest condition to the intermediate operating condition) the legs 4 rotate with respect to the base 2, while in the second operating path part (from the intermediate operating condition to the final operating condition) the legs 4 have a fixed angle with respect to the base 2.

Describing now more in details the solution - as an example and not as a limitation - shown in figures, the kickstand 1 comprises a gear 6 meshing with the shaft of the driving motor 3 and it is rotated (alternatively in two directions) by the latter.

The gear 6 optionally is provided with a dedicated protection case or casing 61.

The assembly of driving motor 3, gear 6 and possibly the casing 61 forms an electric operating assembly, mounted so as to swing with respect to the base 2, for example by a dedicated pin.

The gear 6, at its center, has a threaded hole 62 where a shaft 51 is engaged, which, in turn, is correspondingly threaded.

The shaft 51 is provided with an enlarged head 53 to form a real hydraulic piston and cooperates with a pump body 52 in which it is mounted to so as slide, such to form a real hydraulic pump, where a chamber C for a hydraulic fluid is defined.

The enlarged head 53 of the hydraulic piston is equipped with at least one slotted seat 54 protruding outwardly from the pump body 52; in the slotted seat a transverse pin 7 is placed coupled to the legs 4, eccentrically with respect to the axis of rotation X thereof.

The chamber C of the hydraulic system 5 is in selective fluid communication with hydraulic chambers of the legs 4 (not shown) by means of pipes 59 (suitably provided with hydraulic fittings) such that, when the hydraulic fluid is sent to such chambers, the bars 42 of the legs 4 extend from the cylinders 41 overcoming the force of the inner opposing spring.

The hydraulic system 5 comprising the shaft 51, the pump body 52, the enlarged head 53 is a movable equipment able to translate with respect to the electric operating assembly along a direction substantially coinciding with the central longitudinal axis of the shaft 51; more particularly the translation occurs for a length equal about to the length of the slotted seat 54 (measured in a direction parallel to the central longitudinal axis of the shaft 51).

The casing 61 of the gear 6 (if present, or as an alternative a suitable abutment if provided) is an abutment element to stop said translation of the hydraulic system, as it will be more clear below.

It has to be noted that the shaft 51, besides being the hydraulic piston of the hydraulic system 5 is rotatably coupled with the legs by means of the seat 54 and the pin 7.

Now the operation of the kickstand 1 will be described, by supposing - for simplicity reasons - to start from the rest condition of fig.1 and 2, to the final operating condition of fig.6-8.

In a first step, resulting from the driving motor 3 being operated, the gear 6 is rotated; the rotation thereof (by the thread of the hole 62 in which the thread of the shaft 51 is engaged) causes the shaft 51 to translate.

In this first step the whole hydraulic system 5 translates, driven by the translation of the shaft 51 being screwed within the hole 62.

The translation of the shaft 51 causes the pin 7 to move and therefore the legs 4 to be rotatably operated.

Such first step ends upon reaching the intermediate operating condition, shown in fig.3-5, where the legs 4 are rotated with respect to the base 2, but the bars 42 are housed still inside the cylinders 41; in this condition the hydraulic system abuts on the casing 61 (or - equivalently - on an abutment intended for the aim).

It has to be noted that during the whole first step the hydraulic system 5 is disabled, meaning that it does not compress the oil in the chamber C, which is in enabled fluid communication with the hydraulic chambers of the legs 4; the force of the opposing springs, inside the legs 4, together with the provision of the degree of freedom of the hydraulic system, does not allow the shaft 51 and the head 53 to compress the hydraulic fluid within the circuit.

Then, in the second step, the driving motor 3 continues to rotate the gear 6, while translating the shaft 51 like in the first step, but in this case the translation of the hydraulic system 5 is prevented by the pump body abutting against the casing 61 (or - equivalently - on the abutment); the legs 4 are in a fixed position with respect to the base 2.

The shaft 51 therefore begins to compress the hydraulic fluid in the chamber C.

In this step the chamber C remains in enabled fluid communication with the hydraulic chambers of the legs 4, such that the shaft 51 lastly generates a movement of the hydraulic fluid in the hydraulic chambers of the legs 4 consequently moving the bars 42 out from the cylinders 41.

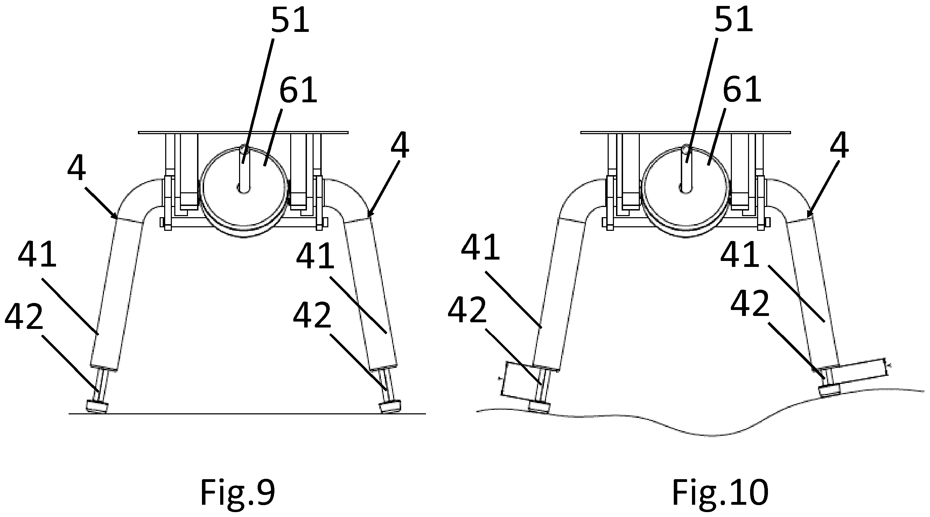

It has to be noted, by the way, that the chamber C and the hydraulic chambers of the legs are in simultaneous communication with each other, forming a kind of communicating vessel circuit (with the chamber C as the intermediate portion between the chambers of the legs), such that the bars 42 extend, in principle, by the same amount from the cylinders 41, thus obtaining a stable and sturdy support on the ground, as in fig.9 in case of a levelled ground.

On the contrary if the ground is not levelled but is uneven, as in fig.10, the presence of a simultaneous communication between the chambers of the legs 4 and the chamber C allows the bars 42 to extend in a different manner, which in short adapt themselves to the unevenness of the ground, allowing known problems of this case already mentioned above to be overcome.

At the end of the second step the fluid communication between the hydraulic chambers of the legs and the chamber C is stopped, such to isolate them and to prevent bars 42 from returning back under the effect of the vehicle weight.

Thus it has to be noted that also an effective antitheft function is obtained: with no control on the driving motor 3 it is not possible to return the legs 4 back, thus any movement of the vehicle is prevented.

Shortly the not claimed operating method of a kickstand 1 for vehicles of the invention is obtained, where the kickstand 1 comprises an electric driving assembly and a hydraulic system, said kickstand comprising cylinders 41 rotatable with respect to a base 2 fastenable to a frame of the vehicle and telescopic bars associated to said cylinders 41 and intended to be deployed therefrom by the hydraulic system, wherein the method comprises the following steps starting from a rest step:
- a first step where the driving motor 3 rotates the legs 4 with respect to the base 2 and causes the hydraulic system 5 to translate, the latter being in a not operating condition;
- a second step where the driving motor 3 drives the hydraulic system, extending the bars 42 from the cylinders 41 of the legs 4.

In the preferred and shown embodiment both in the first and second steps the driving motor 3 acts on a shaft 51, being part of a hydraulic piston of a pump of the hydraulic system and coupled to the legs 4.

The return step of the legs 4 occurs in a similar manner and with a process opposite to what described up to now (by simply rotating the motor 3 in an opposite direction) and no further reference is made thereto.

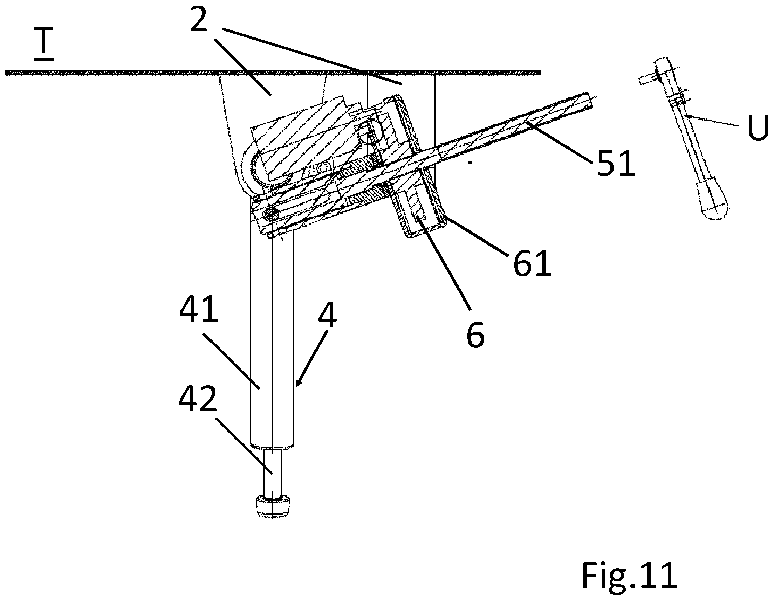

With reference to fig.11 it has to be noted that manual release means are optionally provided, which are particularly useful in case of failure of the motor 3 or in case of no power supplying the motor 3 (e.g. dead battery of the vehicle): such manual release means comprise a tool socket axially placed on the head of the shaft 51 opposite to the one coupled to the enlarged head 53, in which socket a tool U is fitted (such as a hexagonal head wrench, screw driver or the like) to allow the shaft 51 to rotate when the motor 3 is not operating.

Thus the above objects are achieved.

Then many variants are possible to what described up to now, all to be considered equivalent to the present invention.

For example instead of the electric motor 3 it may be provided another type of motor (magnetic, hydraulic or the like); cylinders 41 of the legs 4 can further have any external shape (polyhedric, cylindrical or so on) .

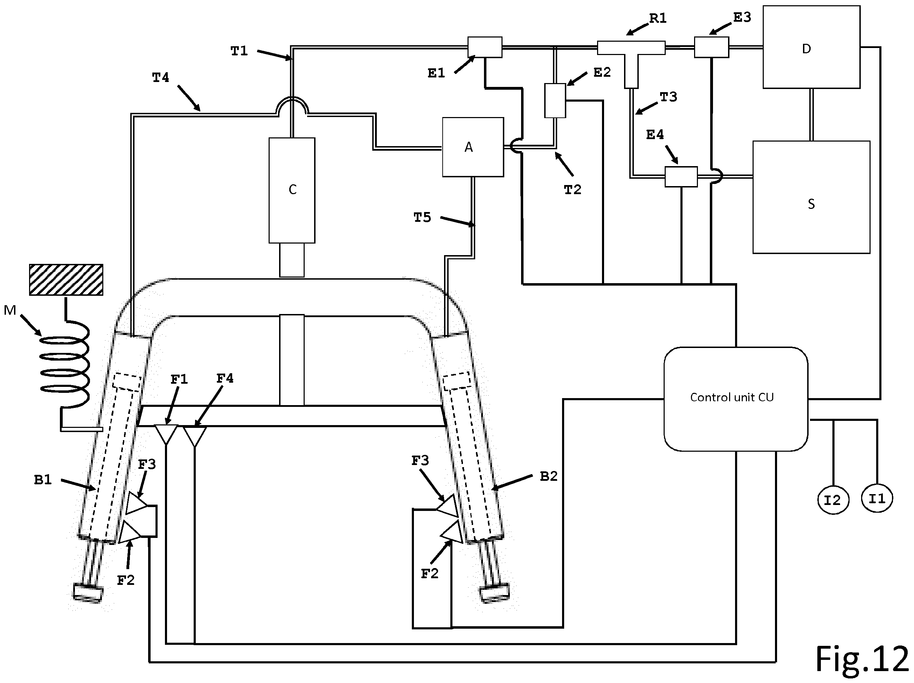

With reference to figure 12 it shows one embodiment where the kickstand according to the present invention can be applied to an already existing motor vehicle not arranged in factory to be equipped with the kickstand according to the present invention.

Such embodiment of "retrofit" type is schematically shown since it is possible to make reference to the construction of the previous embodiment for constructional changes to be made with respect to the embodiment of the previous version.

In order to obtain such object to set the kickstand according to the invention as equipment that can be applied later to any existing motor vehicle, the shown embodiment is selected not as a limitation such to need a minimum number of interfaces fastening to the existing motor vehicle and such to be provided as a kit possibly with some variable elements for being adapted to different structural conditions defined by the construction of the motor vehicles to which equipment has to be applied.

Obviously the shown embodiment does not limit the technical concept to such universal variant, but it can provide also a plurality of variants each one configured such to specifically fit some particularly common motor vehicle models.

As regards the specific embodiment according to which the equipment is made such to fit as much as possible most of the existing motor vehicles, the invention provides to delocalize operations of the system such to reduce overall dimensions due to mechanical assemblies to the area under the vehicle floor near the kickstand structure.

In a preferred embodiment the kickstand has a balancing system controlling the extension of the feet as compensation as already described in the previous embodiment.

In a preferred variant embodiment the operation of the rotation of the kickstand is provided not to be a mechanical one, as in the previous example using a worm screw, but by means of hydraulic actuators supplied by a hydraulic circuit whose pressurized fluid flowing and generating members are provided in a delocalized position with respect to the kickstand installation region, and wherein the hydraulic circuit is controlled by a combination of solenoid valves and position sensors that in turn are controlled together with pressure and fluid flowing generators by an electronic control unit, for example a programmable processor unit executing a control program encoding instructions for performing the functions provided for the kickstand and it has interfaces for communication with sensors, solenoid valves and pressurized fluid flowing and generating members.

As already said above the balancing system works according to the same concepts, however the solution suggested in this embodiment is mechanically simpler since it is not more necessary for it to be open and for the piston to have the slot as in the case of the piston 53 with the slot 54.

With reference to figure 12 the hydraulic circuit comprises a kickstand with a pair of feet mounted at the ends of the rods of a hydraulic cylinder B1 and B2 respectively.

A hydraulic cylinder C controls the downward rotation of the kickstand.

Hydraulic cylinders B1, B2 and C are supplied by a hydraulic pump D in communication with a reservoir S.

An elastic spring M acts for the back operation of the rotation of the kickstand. This prevents a reversible system from being provided, particularly as regards the pump. Such a system, although being more complicated, is always possible since it is sufficient to provide a reversible pump for example by means of a distributor reversing the delivery flow between the two inlets/outlets of double-acting cylinders used for the rotation of the kickstand and of the adjustable feet.

A union tee R1 connects the delivery of the pump P both to the cylinder C and to the reservoir S as well as the cylinder C to the reservoir S. The solenoid valve E1 opens and closes the delivery of the pump towards the cylinder C. The solenoid valve E2 opens and closes the connection of union tee R1 to compensation system A. The solenoid valve E3 opens and closes the connection to the delivery of the pump D and the solenoid valve opens and closes the connection to reservoir S through union tee R1. Pipes T1, T2, T3, T4 and T5 connect the cylinder C with the delivery of the pump D respectively, the compensation system A respectively and alternatively with the reservoir S or with the delivery of the pump D, the circuit with reservoir S and the two cylinders B1 and B2 with the compensation system A.

A control unit CU controls the opening and closure of solenoid valves and the operation of the pump D by executing a control program in which instructions for the system operation are encoded. Moreover the control unit CU can be provided with interfaces connectable or connected by cable or wireless mode to perform settings of the system and/or for unloading diagnostic data or to perform upgrade of the control program. They are not shown in details and can be usual interfaces for example those used in control electronic systems and known as CAN Bus.

Still according to a characteristic it is possible to provide sensors monitoring the movements of the kickstand for example limit microswitches or the like and that in the shown example are denoted, not as a limitation, as:
- a sensor F1 to control the end downward rotation of the kickstand on the basis of such signal the control unit closes the valve E1 and opens the valve E2;
- a sensor F2 to control the end extension of feet and on the basis of such signal the control unit closes the valve E3;
- a sensor F3 to control the completion of the return travel of the feet on the basis of such signal the control unit CU closes the valve E2 and opens the valve E1 and

A sensor F4 to control the end upward rotation of the kickstand on the basis of such signal the control unit CU closes valves E1, E3, E4.

Obviously it is possible to provide other sensor arrangements connected to the control unit or acting directly on the valves.

As regards the embodiment of figure 12, its operation is described herein below:
With the kickstand in the rest condition that is with the kickstand lifted up to allow the vehicle to travel, the system has the solenoid valves E1, E2, E3 and E4 closed.

When the user desires to stop and place the motor vehicle on the kickstand, a switch I1 connected to the control unit when present or directly to the pump, drives the hydraulic pump D and opens solenoid valves E1 and E3. By taking oil from the reservoir S the pump D compresses it in the circuit by operating through the pipe T1 the cylinder C that controls the downward rotation of the kickstand. Once the downward rotation of the kickstand is completed the sensor F1 causes the valve E1 to close and the solenoid valve E2 to open therefore through the pipe T2 the oil pushed by the hydraulic pump D flows to the balancing system A that in turn through the pipes T4 and T5 controls the feet B1 and B2 to extend.

Feet are locked by the balancing system A by the same manners already described above in the embodiment of figures 1 to 11.

Once such condition is reached, announced to the electronic unit CU by the microswitch F2 the solenoid valve E3 is closed. It has to be noted that in this condition the solenoid valve E4 is still closed, therefore oil cannot flow from the circuit to the reservoir. Now the kickstand is in its condition of use, that is vehicle parking condition, the circuit is locked and the oil cannot enter back in the hydraulic pump D and in the reservoir S.

The return step of the kickstand in the rest position that is vehicle travel condition is enabled by a switch I2 which closes the solenoid valve E1 and opens the solenoid valve E4. The solenoid valve E3 is closed resulting from the previous step. Thus oil is allowed to go back in reservoir S and therefore contemporaneously feet B1 and B2 return back. Once the feet are back the microswitch F3 causes the solenoid valve E2 to be closed and opens the solenoid valve E1.

The upward rotation step of the kickstand is guaranteed by the force of the spiral spring M which does not face the counter pressure of oil since solenoid valves E1 and E4 are open.

Once such step is completed the microswitch F4 detects the end-of-travel of the kickstand lifting movement and closes all the solenoid valves E1, E3, E4.

Kickstand down and up switches are denoted by I1 and I2 in figure 12 and operate the pump D and solenoid valves according to functional manners described above.

## Claims

1. Kickstand (1) for two-wheeled vehicles, such as motorcycles, motor scooters, bicycles, electric bicycles and the like comprising a base (2) fastening to a frame (T) of the vehicle, a driving motor (3) and two legs (4) swiveling with respect to the base (2) along an operating path, between two limit positions coinciding with a rest condition of the kickstand, where the legs (4) are not in contact with the ground, and an operating condition where the legs (4) are in contact with the ground, whereby
said at least one leg (4), preferably both the legs (4) are telescopically extensible and retractable, comprising a cylindrical body (41) and a bar (42) sliding within the cylindrical body (41),
the kickstand (1) comprising a hydraulic system (5) driving the bar (42) relative to the body (41),
and wherein the operating path, from the rest to the operating condition, is divided into two parts, a first operating path part, where the driving motor (3) drives the leg or legs (4) so as to rotate with respect to the base (2) and a second operating path part where the driving hydraulic system (5) drives the bar or bars (42) extending from the cylindrical body (41),
while there is provided an automatic system balancing the extension path of said at least one bar (42) from the cylindrical body (41) that determines an extension path of each bar (42) as a function of the distance between the position of the bar (42) completely retracted into the corresponding cylindrical body and the point or region of support of said bar (42) on the ground such to keep the vertical, longitudinal, central plane of the motor vehicle substantially perpendicular to the ground,
and wherein the said kickstand comprises:
- a hydraulic fluid reservoir (S);
- a pump supplying said hydraulic fluid with a predetermined pressure to a hydraulic circuit distributing said fluid;
- a hydraulic actuator cylinder (C) driving a rotation of the kickstand from a rest position to an operating position;
- a hydraulic cylinder (B1, B2) whose rod is a bar (42) sliding into a leg of the kickstand between a completely extended position to a completely retracted position into the leg of said kickstand;
- a shared manifold (A) distributing the hydraulic fluid to each of the two cylinders (B1, B2) associated to one of the legs (4) of the kickstand respectively, which manifold puts in communication both the cylinders (B1, B2) with each other;
- a combination of servo-controlled valves (E1, E2, E3, E4) and a branch deviating the fluid between the delivery of the pump (D) and a recovery reservoir (S);
- a position sensor for the kickstand with reference to the rotational position in the rest condition and in the operating condition;
- a position sensor for each bar (42) with respect to the leg (4);
- a control unit (CU) set to control the pump (D) and separately each valve (E1, E2, E3, E4) of said combination of servo-controlled valves such to alternatively supply or prevent from being supplied the hydraulic actuator cylinder (C) driving the rotation of the kickstand and the manifold (A) that is the hydraulic cylinders (B1, B2) and to connect said cylinders and said distribution manifold to the reservoir (S);
- control means (II, I2) to activate the kickstand to perform the operating path from the rest condition to the operating condition and vice versa.

2. Kickstand according to claim 1, wherein each bar is composed of or is controlled by the rod of the hydraulic
cylinder and each hydraulic cylinder is connected separately and independently to the pressurized fluid delivery there being provided for each hydraulic cylinder and/or for each bar, sensors for the pressure of the bar against the ground and/or of the fluid inside the bar (42), the outputs of said sensors being connected to a control unit (CU) that compares the signals of said sensors with one another and stops the pressurized fluid flow to the first cylinder (41) whose pressure value exceeds a predetermined threshold, supplying the pressurized fluid to the other cylinder (41) till the pressure value measured for it exceeds also said threshold and/or is substantially identical to the value measured for said first cylinder.

3. Kickstand (1) according to claim 1 or 2, wherein for each telescopically extensible and retractable leg there is provided an opposing spring intended to maintain the bar (42) in a position fitted, that is retracted, in the cylinder (41).

4. Kickstand (1) according to one or more of the preceding claims, wherein in the first operating path part the rotation of the kickstand is controlled by the motor (3) by a mechanical transmission that converts the rotational motion into a linear motion of a bar driving the rotation of the kickstand while the hydraulic system (5) driving the bars (42) is disabled and in the second operating path part the hydraulic system (5) is enabled and is operated by said driving motor (3) that activates a hydraulic pump (51, 52, 53) such to supply pressurized fluid in the chambers of the cylinders operating the bars (42) .

5. Kickstand (1) according to claim 4, wherein the kickstand has a rotation stop abutment, while the mechanical transmission converting the rotational motion into linear motion controlling the rotation of the kickstand has means releasing the kickstand such to perform an extra-travel operating the pump supplying the pressurized fluid to the hydraulic system (5).

6. Kickstand (1) according to claim 4 or 5, comprising:
- a gear (6) meshing the shaft of the driving motor (3) and provided further optionally with a protection casing (61) and with a hole (62) threaded at the center thereof; the assembly of driving motor (3), gear (6) and preferably casing (61) being an electric driving assembly mounted to as to swing with respect to the base (2);
- a shaft (51), threaded correspondingly to the threaded hole (62) of the gear (6) and cooperating therewith, said shaft (51) being further provided with an enlarged head (53) to form a hydraulic piston, and wherein the kickstand (1) comprises a hydraulic pump body (52) in which said shaft (51) is slidably mounted to form a hydraulic pump, wherein at least one chamber (C) for a hydraulic fluid is defined; the hydraulic system (5) comprising the shaft (51), the pump body (52), the enlarged head (53) being an equipment movable with respect to the electric driving assembly along a direction substantially coinciding with the central longitudnal axis of the shaft (51) and wherein
the enlarged head (53) of the hydraulic piston is equipped with at least one slotted seat (54) protruding outwardly from the pump body (52), the kickstand (1) comprising a transverse pin (7) eccentrically coupled to the legs (4) with respect to an axis of rotation (X) thereof, said transverse pin (7) being partially housed in said slotted seat (54).

7. Kickstand according to claims 1 to 3, **characterized in that** the driving motor (3) is a motor driving a pump supplying a pressurized fluid, the delivery of said pump being connected to a hydraulic actuator driving the rotational motion of the kickstand in the first operating path part, while the hydraulic system driving the bars (42) is disabled, said hydraulic system driving the bars (42) being enabled upon reaching the kickstand rotation stop at the end of the first operating path part, connecting the cylinders (41) to the delivery of said pump.

8. Kickstand according to one or more of the preceding claims, **characterized in that** it is made as a separate and independent kit or integration equipment mountable on already existing motor vehicles.

## Patentansprüche

1. Ständer (1) für Zweiradfahrzeuge, wie Motorräder, Motorroller, Fahrräder, Elektrofahrräder und dergleichen, umfassend eine an einem Rahmen (T) des Fahrzeugs befestigte Basis (2), einen Antriebsmotor (3) und zwei Beine (4), die in Bezug auf die Basis (2) entlang eines Betriebswegs zwischen zwei Grenzpositionen schwenkbar sind, von denen eine einem Ruhezustand des Ständers in dem sich die Beine (4) nicht in Kontakt mit dem Boden befinden, und die andere einem Betriebszustand, in dem sich die Beine (4) in Kontakt mit dem Boden befinden, entspricht,
wobei
der mindestens eine Bein (4), vorzugsweise beide Beine (4), teleskopisch aus- und einziehbar sind und einen zylindrischen Körper (41) sowie eine in dem zylindrischen Körper (41) gleitende Stange (42) umfassen,
wobei der Ständer (1) ein hydraulisches System (5) zur Betätigung der Stange (42) relativ zum Körper (41) umfasst,
und wobei der Betriebsweg vom Ruhe- zum Betriebszustand in zwei Teile unterteilt ist, d. h. in einen ersten Betriebswegteil, in dem der Antriebsmotor (3) das Bein oder die Beine (4) zu einer Drehung gegenüber der Basis (2) antreibt, und in einen zweiten Betriebswegteil, in dem das hydraulische Antriebssystem (5) die Stange oder Stangen (42) zum Auszug aus dem zylindrischen Körper (41) antreibt,
wobei ein automatisches System vorgesehen ist, das den Auszugsweg der mindestens einen Stange (42) aus dem zylindrischen Körper (41) ausgleicht und das einen Auszugsweg jeder Stange (42) als Funktion des Abstands zwischen der Position der vollständig in den entsprechenden zylindrischen Körper eingezogenen Stange (42) und dem Punkt oder Bereich der Abstützung der Stange (42) auf dem Boden bestimmt, so dass die vertikale Längsmittelebene des motorisierten Fahrzeugs im Wesentlichen senkrecht zum Boden bleibt,
und wobei der Ständer Folgendes umfasst:
- einen Hydraulikflüssigkeitsspeicher (S);
- eine Pumpe, die die Hydraulikflüssigkeit mit einem bestimmten Druck an einen die Flüssigkeit verteilenden Hydraulikkreislauf zuführt;
- einen hydraulischen Stellzylinder (C), der eine Drehung des Ständers aus einer Ruheposition in eine Betriebsposition bewirkt;
- einen Hydraulikzylinder (B1, B2), dessen Zylinderstange eine Stange (42) ist, die in einem Bein des Ständers zwischen einer vollständig ausgezogenen Position und einer vollständig eingezogenen Position in dem Bein des Ständers gleitet;
- einen gemeinsamen Verteiler (A), der die Hydraulikflüssigkeit auf jeden der beiden Zylinder (B1, B2) verteilt, die jeweils einem der Beine (4) des Ständers zugeordnet sind, wobei der Verteiler die beiden Zylinder (B1, B2) miteinander verbindet;
- eine Kombination von servogesteuerten Ventilen (E1, E2, E3, E4) und eine Abzweigung, die das Fluid zwischen dem Auslass der Pumpe (D) und einem Rückgewinnungsbehälter (S) umleitet;
- einen Positionssensor für den Ständer bezüglich der Rotationsposition im Ruhezustand und im Betriebszustand;
- einen Positionssensor für jede Stange (42) bezüglich des Beins (4);
- eine Steuereinheit (CU), die dazu eingerichtet ist, die Pumpe (D) und jedes Ventil (E1, E2, E3, E4) der genannten Kombination von servogesteuerten Ventilen separat derart zu steuern, dass der die Drehung des Ständers antreibende hydraulische Stellzylinder (C) und der Verteiler (A) bzw. die Hydraulikzylinder (B1, B2) abwechselnd gespeist oder an der Speisung gehindert werden, und die besagten Zylinder und den besagten Verteiler mit dem Speicher (S) verbunden werden;
- Steuermittel (11, 12) zur Aktivierung des Ständers, um den Betriebsweg vom Ruhezustand in den Betriebszustand und umgekehrt zu verfahren.

2. Ständer nach Anspruch 1, bei dem jede Stange von der Stange des Hydraulikzylinders gebildet oder gesteuert wird und jeder Hydraulikzylinder separat und unabhängig mit der Druckflüssigkeitszufuhr verbunden ist, wobei für jeden Hydraulikzylinder und/oder für jede Stange Sensoren für den Druck der Stange gegen den Boden und/oder der Flüssigkeit im Inneren der Stange (42) vorgesehen sind, wobei die Ausgänge der Sensoren mit einer Steuereinheit (CU) verbunden sind, die die Signale der Sensoren miteinander vergleicht und den Druckmittelfluss zum ersten Zylinder (41) dessen Druckwert einen vorbestimmten Schwellenwert überschreitet, unterbricht, und das Druckmittel dem anderen Zylinder (41) zuführt, bis der für ihn gemessene Druckwert ebenfalls den Schwellenwert überschreitet und/oder im Wesentlichen identisch mit dem Wert ist, der beim ersten Zylinder gemessen wurde.

3. Ständer (1) nach Anspruch 1 oder 2, **dadurch gekennzeichnet, dass** für jedes teleskopisch ausziehbare und einziehbare Bein eine entgegenwirkende Feder vorgesehen ist, die dazu bestimmt ist, die Stange (42) in einer in den Zylinder (41) eingesetzten, d. h. eingezogenen Position zu halten.

4. Ständer (1) nach einem oder mehreren der vorhergehenden Ansprüche, wobei im ersten Betriebswegteil die Drehung des Ständers durch den Motor (3) mit einem mechanischen Getriebe gesteuert wird, das die Drehbewegung in eine Linearbewegung einer die Drehung des Ständers antreibenden Stange umwandelt, während das die Stangen (42) antreibende Hydrauliksystem (5) deaktiviert ist, und im zweiten Betriebswegteil das Hydrauliksystem (5) aktiviert ist und durch den Antriebsmotor (3) betrieben wird, der eine Hydraulikpumpe (51, 52, 53) aktiviert, um die Kammern der Zylinder, die die Stangen (42) antreiben, mit Druckflüssigkeit zu versorgen.

5. Ständer (1) nach Anspruch 4, wobei der Ständer einen Drehanschlag aufweist, während das mechanische Getriebe, das die Drehbewegung in eine Linearbewegung umwandelt und die Drehung des Ständers steuert, Mittel aufweist, die den Ständer freigeben, um einen Extrahub auszuführen, der die Pumpe betätigt, die das Hydrauliksystem (5) mit Druckflüssigkeit versorgt.

6. Ständer (1) nach Anspruch 4 oder 5, umfassend:
- ein mit der Welle des Antriebsmotors (3) in Eingriff stehendes Zahnrad (6), das außerdem wahlweise mit einem Schutzgehäuse (61) und mit einem in dessen Mitte angeordneten Gewindeloch (62) versehen ist; wobei die Anordnung aus Antriebsmotor (3), Zahnrad (6) und vorzugsweise Gehäuse (61) eine elektrische Antriebsgruppe ist, die schwenkbar gegenüber der Basis (2) montiert ist;
- eine Welle (51), die entsprechend dem Gewindeloch (62) des Getriebes (6) mit einem Gewinde versehen ist und mit diesem zusammenwirkt, wobei die Welle (51) ferner mit einem erweiterten Kopf (53) unter Ausbildung eines Hydraulikkolbens versehen ist, und wobei der Ständer (1) einen hydraulischen Pumpenkörper
(52) umfasst, in dem die Welle (51) verschiebbar angeordnet ist, um eine hydraulische Pumpe zu bilden, wobei mindestens eine Kammer (C) für ein Hydraulikfluid definiert ist; wobei das die Welle (51), den Pumpenkörper (52) und den erweiterten Kopf (53) umfassende hydraulische System (5) eine Ausrüstung ist, die in Bezug auf die elektrische Antriebsgruppe entlang einer Richtung beweglich ist, die im Wesentlichen mit der zentralen Längsachse der Welle (51) zusammenfällt, und wobei
der erweiterte Kopf (53) des Hydraulikkolbens mit mindestens einem geschlitzten Sitz (54) ausgestattet ist, der von dem Pumpenkörper (52) nach außen vorsteht, wobei der Ständer (1) einen Querstift (7) umfasst, der bezüglich einer Drehachse (X) der Beine (4) exzentrisch mit diesen gekoppelt ist, wobei der Querstift (7) teilweise in dem geschlitzten Sitz (54) aufgenommen ist.

7. Ständer nach einem der Ansprüche 1 bis 3, **dadurch gekennzeichnet, dass** der Antriebsmotor (3) ein Motor ist, der eine Pumpe zum Zuführen eines unter Druck stehenden Fluids antreibt, wobei die Zuleitung der Pumpe mit einem hydraulischen Aktuator verbunden ist, der die Drehbewegung des Ständers im ersten Teil des Betriebswegs antreibt, während das die Stangen (42) antreibende hydraulische System deaktiviert ist, wobei das die Stangen (42) antreibende hydraulische System beim Erreichen des Drehanschlags des Ständers am Ende des ersten Teils des Betriebswegs aktiviert wird und dabei die Zylinder (41) mit der Zuleitung der Pumpe verbindet.

8. Ständer nach einem oder mehreren der vorhergehenden Ansprüche, **dadurch gekennzeichnet, dass** er als separater und eigenständiger Bausatz oder als integrierte Ausrüstung hergestellt wird, die an bereits existierende motorisierte Fahrzeuge montiert werden kann.

## Revendications

1. Béquille (1) pour
véhicules à deux roues, tels que des motos, scooters, vélos, vélos électriques et similaires, comprenant une base (2) se fixant à un châssis (T) du véhicule, un moteur d'entraînement (3) et deux jambes (4) pivotantes par rapport à la base (2) le long d'une trajectoire de fonctionnement, entre deux positions limites coïncidant avec une condition de repos de la béquille, dans laquelle les jambes (4) ne sont pas en contact avec le sol, et une condition de fonctionnement, dans laquelle les jambes (4) sont en contact avec le sol, de sorte que
ladite au moins une jambe (4), de préférence les deux jambes (4), est/sont télescopiquement extensibles et rétractables, comprenant un corps cylindrique (41) et une barre (42) coulissant à l'intérieur du corps cylindrique (41),
la béquille (1) comprenant un système hydraulique (5) entraînant la barre (42) par rapport au corps (41),
et dans laquelle la trajectoire de fonctionnement, à partir de la condition de repos à celle de fonctionnement, est divisée en deux parties, une première partie de trajectoire de fonctionnement, dans laquelle le moteur d'entraînement (3) entraîne la jambe ou les jambes (4) de sorte à tourner par rapport à la base (2) et une seconde partie de trajectoire de fonctionnement, dans laquelle le système hydraulique d'entraînement (5) entraîne la barre ou les barres (42) s'étendant depuis le corps cylindrique (41),
tandis qu'il est prévu un système automatique équilibrant la trajectoire d'extension de ladite au moins une barre (42) depuis le corps cylindrique (41) et déterminant une trajectoire d'extension de chaque barre (42) en fonction de la distance entre la position de la barre (42) complètement rétractée à l'intérieur du corps cylindrique correspondant et le point ou la région de support de ladite barre (42) sur le sol, de sorte à maintenir le plan vertical, longitudinal, central du véhicule à moteur sensiblement perpendiculaire au sol, et dans lequel ladite béquille comprend: - un réservoir de fluide hydraulique (S);
- une pompe alimentant ledit fluide hydraulique à une pression prédéterminée à un circuit hydraulique distribuant ledit fluide;
- un cylindre d'actionnement hydraulique (C) entraînant une rotation de la béquille à partir d'une position de repos à une position de fonctionnement;
- un cylindre hydraulique (B1, B2) dont la tige est une barre (42) coulissant à l'intérieur d'une jambe de la béquille entre une position complètement étendue et une position complètement rétractée à l'intérieur de la jambe de ladite béquille;
- un collecteur commun (A) distribuant le fluide hydraulique à chacun des deux cylindres (B1, B2) associés respectivement à l'un des jambes (4) de la béquille, lequel collecteur met les deux cylindres (B1, B2) en communication entre eux;
- une combinaison de valves asservies (E1, E2, E3, E4) et une branche déviant le fluide entre le débit de la pompe (D) et un réservoir de récupération (S);
- un capteur de position pour la béquille en référence à la position de rotation dans la condition de repos et dans la condition de fonctionnement;
- un capteur de position pour chaque barre (42) par rapport à la jambe (4);
- une unité de commande (CU) réglée pour commander la pompe (D) et chaque valve (E1, E2, E3, E4) de ladite combinaison de valves asservies séparément de sorte à alimenter ou d'empêcher d'alimenter alternativement le cylindre d'actionnement hydraulique (C) entraînant la rotation de la béquille et le collecteur (A), c.à.d. les cylindres hydrauliques (B1, B2), et à connecter lesdits cylindres et ledit collecteur au réservoir (S);
- des moyens de commande (I1, I2) pour activer la béquille pour qu'elle effectue la trajectoire de fonctionnement à partir de la condition de repos à la condition de fonctionnement et vice versa.

2. Béquille selon la revendication 1, dans laquelle chaque barre est composée de ou est commandée par la tige du cylindre hydraulique et chaque cylindre hydraulique est connecté séparément et indépendamment au débit de fluide sous pression, des capteurs pour la pression de la barre contre le sol et/ou du fluide à l'intérieur de la barres (42) étant prévus pour chaque cylindre hydraulique et/ou pour chaque barre, les sorties desdits capteurs étant connectées à une unité de commande (CU) qui compare les signaux desdits capteurs entre eux et qui arrête le flux de fluide sous pression vers le premier cylindre (41) lorsque la valeur de pression dépasse un seuil prédéterminé, alimentant donc le fluide sous pression à l'autre cylindre (41) jusqu'à ce que la valeur de pression mesurée pour celui-ci dépasse également ledit seuil et/ou soit sensiblement identique à la valeur mesurée pour ledit premier cylindre.

3. Béquille (1) selon la revendication 1 ou 2, dans laquelle un ressort opposant destiné à maintenir la barre (42) dans une position encastrée, c.à.d. rétractée, dans le cylindre (41) est prévu pour chaque jambe télescopiquement extensible et rétractable.

4. Béquille (1) selon l'une ou plusieurs des revendications précédentes dans laquelle, dans la première partie de la trajectoire de fonctionnement, la rotation de la béquille est commandée par le moteur (3) par une transmission mécanique qui convertit le mouvement de rotation en un mouvement linéaire d'une barre entraînant la rotation de la béquille, tandis que le système hydraulique (5) entraînant les barres (42) est désactivé et, dans la seconde partie de la trajectoire de fonctionnement, le système hydraulique (5) est activé et est actionné par ledit moteur d'entraînement (3) qui active une pompe hydraulique (51, 52, 53) de sorte à alimenter un fluide sous pression dans les chambres des cylindres actionnant les barres (42).

5. Béquille (1) selon la revendication 4, dans laquelle la béquille présente une butée d'arrêt de rotation, tandis que la transmission mécanique convertissant le mouvement de rotation en un mouvement linéaire commandant la rotation de la béquille présente des moyens pour libérer la béquille de sorte à effectuer une course supplémentaire actionnant la pompe alimentant le fluide sous pression au système hydraulique (5).

6. Béquille (1) selon la revendication 4 ou 5, comprenant:
- un engrenage (6) engageant l'arbre du moteur d'entraînement (3) et en outre éventuellement pourvu d'un carter de protection (61) et d'un trou (62) fileté au centre de celui-ci; l'ensemble du moteur d'entraînement (3), engrenage (6) et de préférence carter (61) étant un ensemble d'entraînement électrique monté de sore à basculer par rapport à la base (2);
- un arbre (51), fileté de manière correspondante au trou fileté (62) de l'engrenage (6) et coopérant avec celui-ci, ledit arbre (51) étant en outre pourvu d'une tête élargie (53) pour former un piston hydraulique, et dans laquelle la béquille (1) comprend un corps de pompe hydraulique (52) à l'intérieur duquel ledit arbre (51) est monté de manière coulissante pour former une pompe hydraulique, dans laquelle au moins une chambre (C) pour un fluide hydraulique est définie; le système hydraulique (5) comprenant l'arbre (51), le corps de pompe (52), la tête élargie (53) étant un équipement mobile par rapport à l'ensemble d'entraînement électrique le long d'une direction coïncidant avec l'axe longitudinal central de l'arbre (51) et dans laquelle la tête élargie (53) du piston hydraulique est équipée d'au moins un siège fendu (54) faisant saillie vers l'extérieur du corps de pompe (52), la béquille (1) comprenant une broche transversale (7) accouplée excentriquement aux jambes (4) par rapport à un axe de rotation (X) de celui-ci, ladite broche transversale (7) étant partiellement logée à l'intérieur dudit siège fendu (54).

7. Béquille selon les revendications 1 à 3, **caractérisée en ce que** le moteur d'entraînement (3) est un moteur entrainant une pompe alimentant un fluide sous pression, le débit de ladite pompe étant connecté à un actionneur hydraulique entraînant le mouvement de rotation de la béquille dans la première partie de la trajectoire de fonctionnement, tandis que le système hydraulique entraînant les barres (42) est désactivé, ledit système hydraulique entraînant les barres (42) étant activé lorsque l'arrêt de la rotation de la béquille est atteint à la fin de la première partie de la trajectoire de fonctionnement, connectant les cylindres (41) au débit de ladite pompe.

8. Béquille selon l'une ou plusieurs des revendications précédentes, **caractérisée en ce qu'**elle est réalisée sous la forme d'un kit ou d'un équipement d'intégration séparé et indépendant pouvant être monté sur des véhicules à moteur déjà existants.
